# EUROPEAN PATENT SPECIFICATION

(11) **EP 3 894 685 B1**
(45) Date of publication and mention of the grant of the patent: **03.04.2024**
(21) Application number: 19836280.8
(22) Date of filing: 11.12.2019
(51) Int. Cl.: F02K 9/64, F02K 9/97

(54) **COMBUSTION CHAMBER LINER WITH SPIRAL COOLING CHANNELS**
BRENNKAMMERLINER MIT SPIRALFÖRMIGEN KÜHLKANÄLEN
CHEMISE DE CHAMBRE DE COMBUSTION AVEC CANAUX DE REFROIDISSEMENT EN SPIRALE

(30) Priority: 11.12.2018 US 201816216454
(43) Date of publication of application: 20.10.2021
(73) Proprietor: Stratolaunch, LLC, Seattle, WA 98104 (US)
(72) Inventor: THORNBURG, Jeff, Seattle, Washington 98104 (US)
(74) Representative: Murgitroyd & Company
(86) International application number: PCT/US2019/065638
(87) International publication number: WO 2020/123601

(56) References cited:
- WO-A1-01/02131
- WO-A1-2018/045351
- US-A- 3 267 664
- US-A- 4 582 678

## Description

### BACKGROUND

Combustion chambers are commonly used in rocket engines to combust a propellant to generate thrust for a rocket propulsion system. The combustion of this propellant results in a hot exhaust that, when passed through a nozzle of the combustion chamber, produces this thrust. However, the temperatures and pressures generated through the combustion process may be extreme, requiring cooling of the combustion chamber to prevent damage or complete thermal breakdown of the combustion chamber. Exacerbating this is the common requirement that rocket propulsion systems be optimized for weight reductions. Thus, employing complicated rocket propulsion systems that provide optimal cooling of the combustion chamber that are also optimized based on weight considerations is difficult and expensive. The documents WO 01/02131 A1 and US 3 267 664 disclose combustion chambers for rocket engines according to the prior art.

### BRIEF DESCRIPTION OF THE DRAWINGS

Various techniques will be described with reference to the drawings, in which:
FIG. 1 is a perspective view of a combustion chamber liner comprising a plurality of spiral cooling channels along an combustion chamber liner external wall of the combustion chamber liner;
FIG. 2 is a perspective view of a combustion chamber liner showing an combustion chamber liner external wall of the combustion chamber liner and a plurality of spiral cooling channels extending from a nozzle of the combustion chamber liner to an inlet port of the combustion chamber liner;
FIG. 3 is a longitudinal section view of the combustion chamber liner of FIG. 2 showing the spiral cooling channels along the combustion chamber liner external wall of the combustion chamber liner and the combustion chamber liner internal wall of the combustion chamber liner;
FIG. 4 is a perspective view of a combustion chamber liner showing an combustion chamber liner internal wall of the combustion chamber liner from the inlet port to a throat of the combustion chamber liner;
FIG. 5 is a transverse section view of a combustion chamber liner from the throat of the combustion chamber liner showing the plurality of spiral cooling channels along the combustion chamber liner external wall of the combustion chamber liner.

### DETAILED DESCRIPTION

Techniques and systems described below relate to a combustion chamber liner that employs spiral cooling chambers for regenerative cooling of the combustion chamber while in operation. In an example, the combustion chamber liner for a rocket propulsion system is created using a thermal conductive material, such as copper. The combustion chamber liner may comprise an inlet port, through which propellants may be introduced into the combustion chamber for combustion and generation of a hot exhaust usable to generate thrust. Further, the combustion chamber liner may comprise a nozzle, through which the hot gases generated through the combustion of the propellants are accelerated to produce thrust for the rocket propulsion system. The nozzle may comprise a convergent section followed by a divergent section towards the end opposite the inlet port of the combustion chamber liner. Between the inlet port and the end of the nozzle, at the convergent section of the combustion chamber liner may be a throat, where the flow of the hot gases is choked such that, as the hot gases exit the throat, the velocity of the hot gases increases (for supersonic flows) as the area of the nozzle diverges towards the end opposite the inlet port. This may be described as an isentropic expansion of the flow of the hot gases through the nozzle from the throat to the nozzle exit port opposite the inlet port of the combustion chamber liner.

Due to the combustion of the propellants within the combustion chamber, the pressure and temperature within the combustion chamber liner may be exceptionally high. As a result, the combustion chamber liner may be subject to significant thermal expansion at the inner wall, whereas the outer wall of the combustion chamber liner may constrain this thermal expansion due to the temperate gradient between the inner and outer walls. This temperature gradient may result in thermal stresses that may impact the life of the combustion chamber liner. To prevent structural degradation of the combustion chamber liner due to the stresses resulting from high temperatures and pressures within the combustion chamber, the combustion chamber liner may comprise a series of cooling channels along the outer wall of the combustion chamber liner, extending from the inlet port to the nozzle exit port along the circumference of the combustion chamber liner. Through these cooling chambers, propellants or other cryogenic materials may be introduced to provide regenerative cooling for the combustion chamber liner and, thus, reduce the thermal stresses on the combustion chamber liner.

In an example, each cooling channel along the outer wall of the combustion chamber liner is cut into the outer wall in a spiral manner such that the depth, width, and length of the cooling channel is uniform along the outer wall. The cooling channels may be separated from one another a uniform distance throughout the outer wall of the combustion chamber liner. This may improve the efficiency of the regenerative cooling mechanism, as a more uniform flow of the propellants or other cryogenic material is passed through the cooling channels over the span of the outer wall from the inlet port to the nozzle exit port. Further, because the dimensions of the cooling channels are consistent throughout the span of the outer wall of the combustion chamber liner, the pressures encountered within the cooling channels are less prone to sudden decreases, which may result in an improvement in the efficiency of the fuel pump that passes the propellants or other cryogenic material through the cooling channels.

In an example, the cooling channels each include a first chamfer near the inlet port of the combustion chamber liner and a second chamfer near the nozzle exit port. These chamfers may provide a gradient in the wall thickness of the combustion chamber liner the starts near the inlet port of the combustion chamber liner and near the nozzle exit port with decreasing wall thickness until a minimum wall thickness is reached at the throat of the combustion chamber liner. This may result in a smaller temperature gradient at the throat of the combustion chamber liner, where the temperatures and pressures may be at their greatest during operation of the rocket propulsion system. Further, this gradient may reduce the pressure decreases along the cooling channels as the propellants or other cryogenic materials are passed through the cooling channels.

In the preceding and following description, various techniques are described. For purposes of explanation, specific configurations and details are set forth in order to provide a thorough understanding of possible ways of implementing the techniques. However, it will also be apparent that the techniques described below may be practiced in different configurations without the specific details. Furthermore, well-known features may be omitted or simplified to avoid obscuring the techniques being described.

Techniques described and suggested in the present disclosure improve the field of rocket propulsion systems, especially the field of combustion chamber liner implementation, by the thermal stresses on a combustion chamber liner during operation of a rocket propulsion system. Additionally, techniques described and suggested in the present disclosure improve the efficiency of rocket propulsion systems by reducing the thermal gradient along the wall of the combustion chamber liner, thus improving the performance of the fuel pump and other components of rocket propulsion systems. Moreover, techniques described and suggested in the present disclosure are necessarily rooted in rocket propulsion technology in order to overcome problems specifically arising with the combustion of propellants and other chemicals.

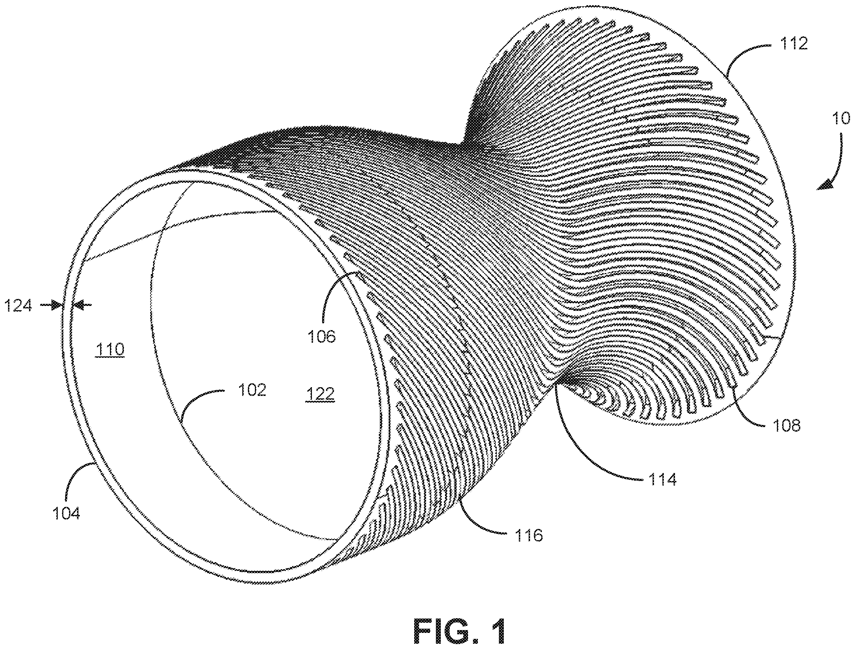

FIG. 1 is a perspective view of a combustion chamber liner 10 comprising a plurality of spiral cooling channels 116 along a combustion chamber liner external wall 104 of the combustion chamber liner 10. The combustion chamber liner 10 may be manufactured using any structurally sound material, preferably copper, a copper alloy, titanium, carbon fiber, Inconel, or any other material capable of withstanding the hoop stresses resulting from high pressures and also of withstanding thermal stresses resulting from temperature gradients along the wall 104 of the combustion chamber liner 10 during operation of a rocket propulsion system. The combustion chamber liner 10 may be manufactured using a Computer Numeric Control (CNC) tool capable of creating the general design of the combustion chamber liner 10, as well as creating the spiral cut cooling channels 116 along the combustion chamber liner external wall 104 of the combustion chamber liner 10 as described herein.

In an embodiment, the combustion chamber liner 10 is introduced into a CNC machine to cut the spiral cut cooling channels 116 into the combustion chamber liner external wall 104. The CNC machine may have several axes of movement and employ lasers or waterjets to create the spiral cut cooling channels 116 along the periphery of the combustion chamber liner external wall 104. For instance, the CNC machine may be capable of creating the spiral cut cooling channels 116 along three linear axes and two rotary axes. A digitized model of the combustion chamber liner 10 may be created, which may include a graphical representation of the spiral cut cooling channels 116 along a graphical representation of the combustion chamber liner 10 and the combustion chamber liner external wall 104. This digitized model may be converted into programmatic code, which may be executed by the CNC machine to engage the lasers or waterjets to cut the spiral cut cooling channels 116 on to a combustion chamber liner 10 introduced into the machine. Alternatively, a solid material may be introduced that may be used by the CNC machine to generate the combustion chamber liner 10 and the spiral cut cooling channels 116 in one process. In some embodiments, the spiral cut cooling channels 116 are defined through the encoding of a mathematical representation of a spiral pattern that is usable by the CNC machine to define and create the spiral cut cooling channels 116.

In an embodiment, the combustion chamber liner 10 includes an inlet port 110, a throat 114, and a nozzle 112, which may collectively surround a combustion area cavity 122 of the combustion chamber liner 10. To generate thrust for the rocket propulsion system, propellants may be introduced into the combustion area cavity 122 via the inlet port 110 using an injector or other means for injecting propellants into the combustion area cavity 122. Within the combustion area cavity 122, the propellants are burned to generate hot exhaust gases that may be used to generate thrust for the rocket propulsion system. For instance, the thermal energy generated through the combustion of the propellants is converted, in large part, into kinetic energy. The combustion chamber liner 10 may be manufactured to converge from the inlet port 110 to throat 114, such that the cross-sectional area of the combustion area cavity 122 decreases from the inlet port to the throat 114 of the combustion chamber liner 10. Further aft from the throat 114, the cross-sectional area of the combustion area cavity 122 may increase throughout the nozzle to the nozzle exit port 112. Due to the contraction of the combustion area cavity 122 through the throat 114, the throat 114 of the combustion chamber liner 10 may experience a maximum gas flow per unit area and experience the highest pressure and temperature gradients of the combustion chamber liner 10.

For a rocket propulsion system, it may be ideal that the gas velocity through the throat 114 be sonic. Thus, as the hot gases exit the throat 114 and enter the divergent portion of the nozzle towards the nozzle exit port 112, the pressure may decrease resulting in an increase in velocity under supersonic conditions. This results in the generation of thrust for the rocket propulsion system, as the conversion of enthalpy to kinetic energy is achieved. The burning of the propellants to generate thrust for the rocket propulsion system may result in high temperatures within the combustion area cavity 122 and, thus, the combustion chamber liner internal wall 102 of combustion chamber liner 10 may be subjected to significant temperatures and pressures during this process. Since the highest temperatures and pressures for the gas flow through the combustion area cavity 122 of the combustion chamber liner 10 is located within the throat 114, the combustion chamber liner internal wall 102 of the combustion chamber liner 10 may experience the greatest thermal stresses and hoop stresses at the throat 114.

To mitigate the impact of thermal and hoop stresses on the combustion chamber liner 10, regenerative cooling of the combustion chamber liner 10 may be used. In an embodiment, the combustion chamber liner 10 includes a plurality of cooling channels 116 cut into the combustion chamber liner external wall 104 of the combustion chamber liner 10 to enable introduction of propellants or other cryogenic materials to reduce the temperature gradient between the combustion chamber liner internal wall 102 of the combustion chamber liner 10 and the combustion chamber liner external wall 104 of the combustion chamber liner 10. These cooling channels 116 may enable convective heat transfer, whereby the propellants may absorb heat from the combustion chamber liner 10 to augment the initial temperature of the propellants and increase their energy levels prior to passing through the injector and into the combustion area cavity 122 through the inlet port 110.

In an embodiment, the cooling channels 116 are designed to minimize the rate of bubble formation and the bubble size generated as a result of the heat transfer from the combustion chamber liner internal wall 102 of the combustion chamber liner 10 to the combustion chamber liner external wall 104 of the combustion chamber liner 10. As it is known in the art, an excessive rate of bubble formation may result in an unstable gas film along the combustion chamber liner external wall 104 of the combustion chamber liner 10, resulting in an insulation layer that may cause a rapid increase in wall temperature. This increase in wall temperature may result in damage to the wall material and the combustion chamber liner 10 itself.

In an embodiment, to reduce the rate of bubble formation within the cooling channels 116, the cooling channels 116 are cut into the combustion chamber liner external wall 104 of the combustion chamber liner 10 using a spiral pattern from the forward portion of the inlet port 110 to the nozzle exit port 112 along the circumference of the combustion chamber liner external wall 104. This may ensure that the cooling channels 116 share a uniform length along the combustion chamber liner external wall 104 of the combustion chamber liner 10 and reduces the amount of gradient along the combustion chamber liner external wall 104 from the inlet port 110, through the throat 114, and to the nozzle exit port 112. Further, the spiral pattern may enable the cooling channels 116 to share a uniform width and depth within the combustion chamber liner external wall 104, thereby minimizing the potential for pressure drops along the combustion chamber liner 10. The spiral pattern utilized for the cooling channels 116 may also promote uniform flow of the propellants through the cooling channels 116, thereby reducing turbulence and the occurrence of thermal hot spots throughout the span of the cooling channels 116. The cooling channels 116 may be cut into the combustion chamber liner external wall 104 of the combustion chamber liner 10 using a CNC tool or other computer-aided manufacturing tool.

In an embodiment, each cooling channel 116 of the plurality of cooling channels comprises an inlet port chamfer 106 and a nozzle exit port chamfer 108 near the inlet port 110 of the combustion chamber liner 10 and the nozzle exit port 112 of the combustion chamber liner 10, respectively. These chamfers 106, 108 may provide a gradual introduction of the propellants into the cooling channels 116 and enable a smooth flow of the propellants out of the cooling channels 116. The inlet port chamfer 106 may initiate at the full thickness of the combustion chamber liner body 124 and, at an angle, cut into the combustion chamber liner external wall 104 of the combustion chamber liner 10 until it reaches the full depth of the cooling channel 116, where the thickness of the combustion chamber liner body 124 may be at a minimum. In an embodiment, each cooling channel 116 of the plurality of cooling channels has a uniform width along the length of the combustion chamber liner 10. Further, in an embodiment, the distance along the circumference of the combustion chamber liner body 124 between cooling channels is at least equal to the uniform width of each cooling channel 116 of the plurality of cooling channels.

The combustion chamber liner internal wall 102 of the combustion chamber liner 10 may be smooth (e.g., have no protrusions, bumps, ridges or other uneven elements that may prevent the presence of an even surface) to prevent any disturbance in the gas flow through the combustion area cavity 122, as it passes through the throat 114 and out the nozzle exit port 112. Thus, the combustion chamber liner internal wall 102 may not have any obstructions that may cause a disturbance of the gas flow through the combustion area cavity 122 that may cause the downstream pressure to rise above the critical pressure value for the combustion chamber liner 10. The combustion chamber liner internal wall 102 and the combustion chamber liner external wall 104 may be separated by a wall thickness of the combustion chamber liner body 124.

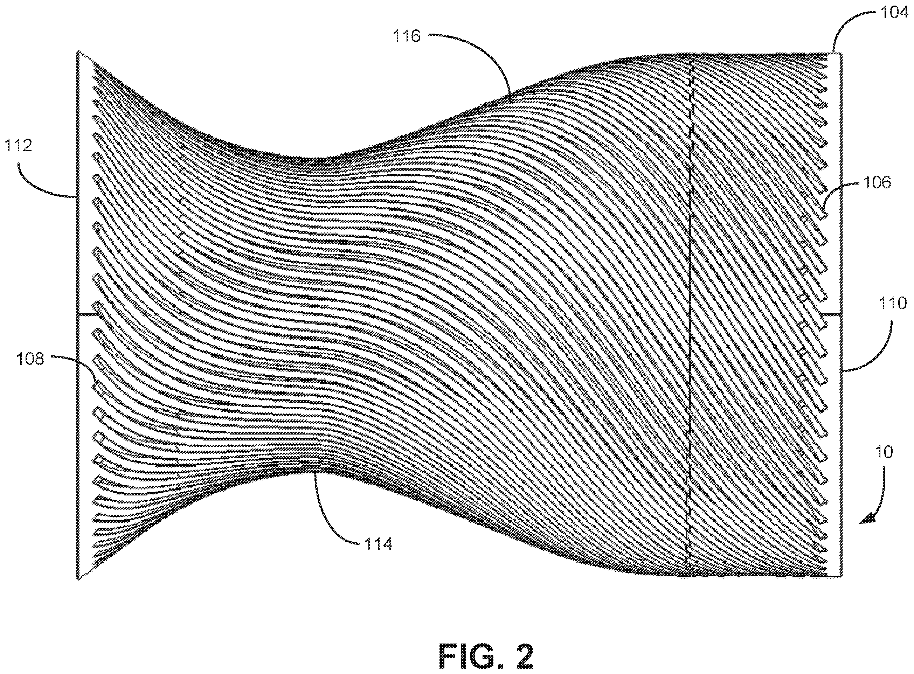

FIG. 2 is a perspective view of a combustion chamber liner 10 showing a combustion chamber liner external wall 104 of the combustion chamber liner 10 and a plurality of spiral cooling channels 116 extending from a nozzle exit port 112 of the combustion chamber liner 10 to an inlet port 110 of the combustion chamber liner 10. In the embodiments shown in FIG. 2, the combustion chamber liner 10 includes a combustion chamber liner external wall 104 that surrounds, circumferentially, the combustion area cavity within the combustion chamber liner 10. The combustion chamber liner external wall 104 may narrow at the throat 114 from the inlet port 110 and then expands to the nozzle exit port 112. In an embodiment, the combustion chamber liner external wall 104 is of a combustion chamber liner body, shown in detail in FIG. 1 described above, which may comprise the combustion chamber liner external wall 104 and a combustion chamber liner internal wall 102 separated from the combustion chamber liner external wall 104 by a wall thickness. The combustion chamber liner internal wall 102 may surround, circumferentially the combustion area cavity 122 within the combustion chamber liner 10.

The combustion chamber liner external wall 104 of the combustion chamber liner body 124, in an embodiment, comprises a plurality of spiral cut cooling channels 116 through which propellants or other cryogenic materials may be introduced to reduce the thermal and hoop stresses of the combustion chamber liner 10 during operation. The spiral cut cooling channels 116 may be cut into the combustion chamber liner body 124 at the combustion chamber liner external wall 104, thus reducing the thickness of the combustion chamber liner body 124 starting at the combustion chamber liner external wall 104 until a cooling channel wall thickness is achieved. In an embodiment, the spiral cut cooling channels 116 initiate at an angle from the inlet port 110 and proceed in a spiral pattern along the span and circumference of the combustion chamber liner body 124 and terminating at another angle relative to the nozzle exit port 112. The spiral pattern selected for each spiral cut cooling channel 116 may be selected to preserve a uniform width for each cooling channel 116 of the plurality of cooling channels. Further, the number of spiral cut cooling channels 116 may be selected such that, along the circumference of the combustion chamber liner body 124, the distance along the circumference of the combustion chamber liner body 124 between cooling channels 116 is at least equal to the uniform width of each cooling channel 116 of the plurality of cooling channels. The thickness of the combustion chamber liner body 124 between the spiral cut cooling channels 116 may be at its maximum thickness.

In an embodiment, the cooling channel wall thickness differs along the length of each cooling channel 116, having a minimum thickness at the throat 114. For instance, a cooling channel 116 may be cut into the combustion chamber liner external wall 104 of the combustion chamber liner body 124 with a chamfer starting at a distance from the inlet port 110 and extending to the throat 114, with a gradually decreasing cooling channel wall thickness. The gradient of the cooling channel wall thickness created using the chamfer may be determined based at least in part on the predicted or analyzed thermal stresses and temperature gradients along the circumference and span of the combustion chamber liner 10. In an embodiment, the cooling channel 116 can also be cut into the combustion chamber liner external wall 104 of the combustion chamber liner body 124 with another chamfer starting at a distance from the nozzle exit port 112 and extending to the throat 114, with a gradually decreasing cooling channel wall thickness, with a minimum cooling channel wall thickness at the throat 114. In some embodiments, the angle of either chamfer can differ such that the minimum cooling channel wall thickness is present along a greater portion of the span of the cooling channels 116.

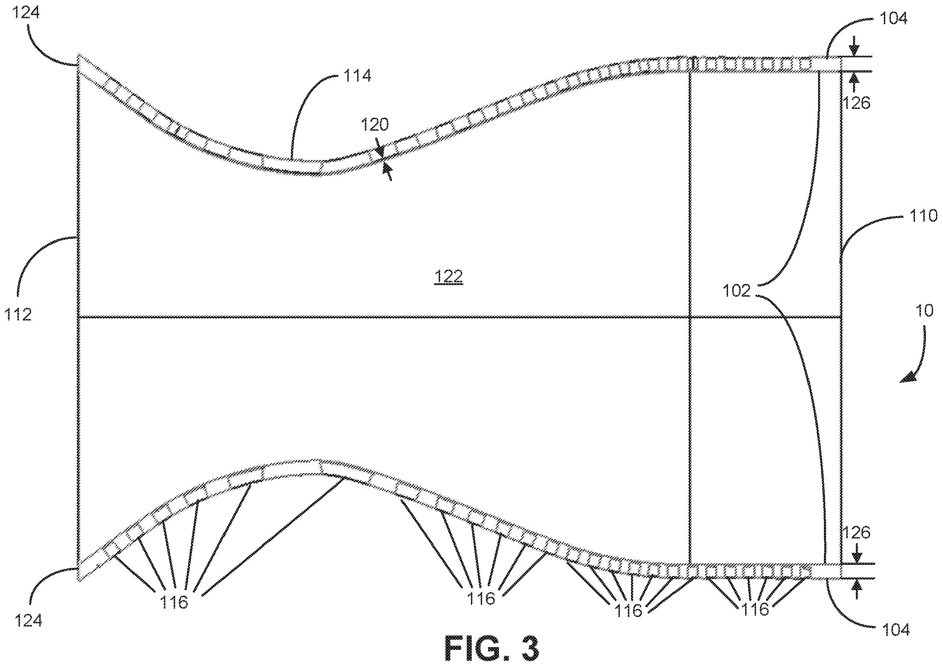

FIG. 3 is a longitudinal section view of the combustion chamber liner 10 of FIG. 2 showing the spiral cut cooling channels 116 along the combustion chamber liner external wall 104 of the combustion chamber liner 10 and the combustion chamber liner internal wall 102 of the combustion chamber liner 10. In the embodiments shown in FIG. 3, the combustion chamber liner internal wall 102 of the combustion chamber liner body 124 is smooth, with no protrusions, bumps, or other rough surfaces that may impair the flow of hot gases through the combustion area cavity 122 of the combustion chamber liner 10. The combustion chamber liner external wall 104 of the combustion chamber liner body 124 may comprise a plurality of cooling channels 116, which may be used to pass propellants or other cryogenic materials to reduce the thermal stresses on the combustion chamber liner body 124 during combustion of propellants within the combustion area cavity 122 inside the combustion chamber liner 10.

The combustion chamber liner body 124 may have an initial thickness 126 at the inlet port 110 and nozzle exit port 112 that is equal to the maximum allowable thickness for the combustion chamber liner 10. This initial thickness 126 may be selected based at least in part on the design considerations for the combustion chamber liner 10 (e.g., weight, thermal conductivity, heat dissipation, etc.). In an embodiment, the spiral cut cooling channels 116 are cut into the combustion chamber liner external wall 104 of the combustion chamber liner body 124 at a distance from the inlet port 110 of the combustion chamber liner 10 based at least in part on design considerations for the inlet port 110. Further, in an embodiment, the spiral cut cooling channels 116 terminate at a distance from the nozzle exit port 112 of the combustion chamber liner 10. This distance may be selected based at least in part on design considerations for the nozzle exit port 112. These design considerations may be similar to those for the overall design of the combustion chamber liner 10, as described above.

In an embodiment, the cooling channels 116 are cut such that the cooling channel wall thickness 120 is less than that of the initial thickness 126 of the combustion chamber liner body 124. The cooling channel wall thickness 120 may be uniform throughout the length of each spiral cut cooling channel 116. Alternatively, each cooling channel 116 may initiate and terminate with a chamfer, which may cause a gradual decrease in the combustion chamber liner thickness from the initial thickness 126 to the cooling channel wall thickness 120 along the length or a portion of the length of the cooling channel 116 along the span of the combustion chamber liner 10. The angle of these chamfers may be determined based at least in part on design considerations for the combustion chamber liner 10, preferably based at least in part on determined thermal stresses along the span of the combustion chamber liner 10.

As noted above, the cooling channels 116 are cut into the combustion chamber liner external wall 104 of the combustion chamber liner body in a spiral pattern along the circumference of the combustion chamber liner 10 from the inlet port 110 to the nozzle exit port 112. The spiral pattern utilized for the cooling channels 116 may be selected such that the combustion chamber liner external wall 104 of the combustion chamber liner 10 has the cooling channel wall thickness 120 over a greater area of the throat 114. As the throat 114 of the combustion chamber liner 10 may exhibit the highest thermal and hoop stresses resulting from combustion of the propellants in the combustion area cavity 122, the increased area at the throat 114 having the cooling channel wall thickness 120 may result in a greater reduction in these stresses. However, each cooling channel 116 may have a uniform width and depth along the length of the cooling channel 116. Thus, the longitudinal cross-sectional area of the combustion chamber liner 10 may demonstrate, at the throat 114, greater areas where the combustion chamber liner body thickness may be at its minimum.

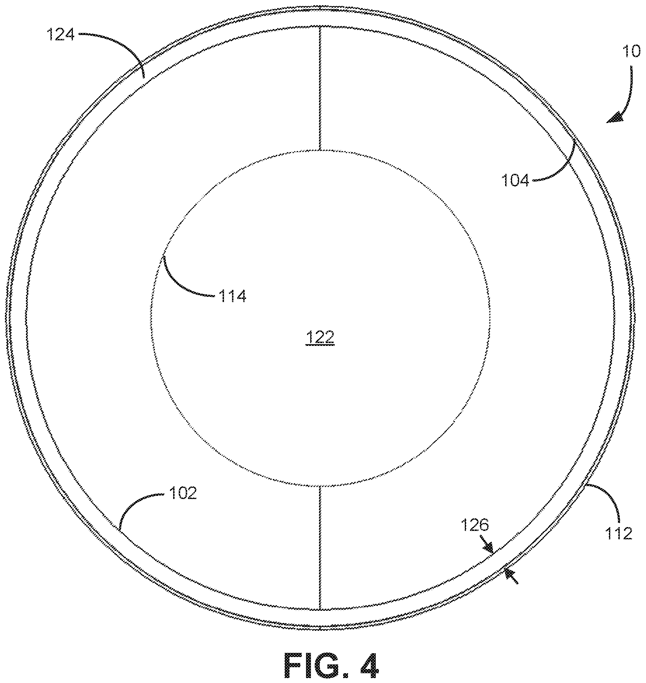

FIG. 4 is a perspective view of a combustion chamber liner 10 showing an combustion chamber liner internal wall 102 of the combustion chamber liner from the inlet port 110 to a throat 114 of the combustion chamber liner 10. As noted above, the combustion chamber liner 10 may be constructed using a circumferential combustion chamber liner body 124 that encompasses a combustion area cavity 122 for the combustion of propellants. At the inlet port 110, the combustion chamber liner body 124 may have an initial thickness 126 between an combustion chamber liner internal wall 102 of the combustion chamber liner 10 and an combustion chamber liner external wall 104 of the combustion chamber liner 10. In an embodiment, at the inlet port 110 of the combustion chamber liner 10, the cooling channels 116 are not present, as these may be cut into the combustion chamber liner external wall 104 of the combustion chamber liner body 124 at a distance from the inlet port 110 of the combustion chamber liner 10 as described above.

The combustion chamber liner internal wall 102 of the combustion chamber liner body 124 may be smooth, with no protrusions, rough edges, bumps, etc. to enable an undisturbed exhaust flow through the combustion area cavity 122 during operation of the rocket propulsion system. Further, the combustion chamber liner body 124 may, along the longitudinal span of the combustion chamber liner 10, converge from an initial cross-sectional diameter at the inlet port 110 to a minimum cross-sectional diameter at the throat 114of the combustion chamber liner 10. The tapering of the diameter along the longitudinal span of the combustion chamber liner 10 may be determined based at least in part on desired exhaust flow conditions through the combustion area cavity 122 of the combustion chamber liner 10. For instance, the tapering of the diameter along the longitudinal span of the combustion chamber liner 10 may be selected such that the exhaust flow through the throat 114 of the combustion chamber liner 10 is sonic. This may cause the exhaust flow to be supersonic at the nozzle and the nozzle exit port 112 aft of the throat 114, as the cross-sectional diameter aft of the throat 114 may expand to a maximum at the nozzle exit port 112.

The initial thickness 126 between an combustion chamber liner internal wall 102 of the combustion chamber liner 10 and an combustion chamber liner external wall 104 of the combustion chamber liner 10 at the inlet port 110 is, in an embodiment, the maximum combustion chamber liner body thickness for the combustion chamber liner 10. At a distance from the inlet port 110 of the combustion chamber liner 10, the combustion chamber liner external wall 104 of the combustion chamber liner 10 is cut to introduce, along the circumference of the combustion chamber liner external wall 104 of the combustion chamber liner body 124, the cooling channels 116. In an embodiment, the cooling channels 116 are cut into the combustion chamber liner external wall 104 of the combustion chamber liner 10 with a chamber to gradually, along the length of the cooling channels 116, reduce the thickness of the combustion chamber liner body 124 from the initial thickness 126 to a minimum cooling channel wall thickness 120, exemplified at the throat 114 of the combustion chamber liner 10. The angle of the chamfer may be selected based at least in part on the predicted thermal stresses along the longitudinal span of the combustion chamber liner 10 and along the length of each cooling channel 116. Thus, based at least in part on these predicted thermal stresses, different chamfers and thicknesses may be selected for each cooling channel.

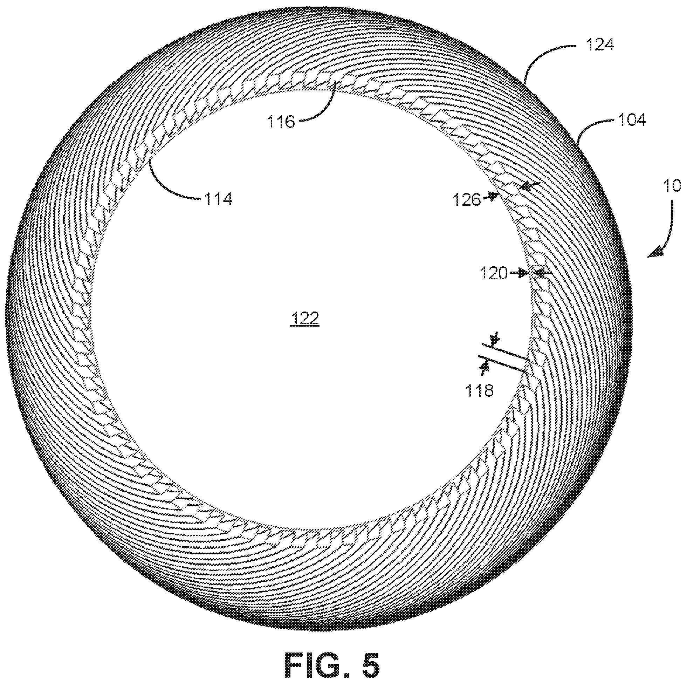

FIG. 5 is a transverse section view of a combustion chamber liner 10 from the throat 114 of the combustion chamber liner 10 showing the plurality of spiral cut cooling channels 116 along the combustion chamber liner external wall 104 of the combustion chamber liner body 124. At the throat 114, the cooling channel wall thickness 120 of each cooling channel 116 may be at a minimum, as this may mitigate the extreme thermal stresses experienced at the throat 114 during operation of the rocket propulsion system, as propellants or other cryogenic materials are pumped through the cooling channels 116. In an embodiment, the cooling channels 116 cut along the combustion chamber liner external wall 104 of the combustion chamber liner body 124 may each be separated by the combustion chamber liner body 124 having the initial thickness 126 from the inlet port 110, described above. In some instances, the separation between each cooling channel 116 may have a different thickness than the initial thickness 126. However, this different thickness may still be greater than the cooling channel wall thickness 120 of the cooling channels 116.

Each cooling channel 116 may have a uniform cooling channel width 118. The actual cooling channel width 118 may be selected based at least in part on various design considerations including, but not limited to, the amount of surface area along the circumference of the combustion chamber liner 10 required to mitigate the impact of the thermal stresses of the combustion chamber liner 10 resulting from combustion of propellants within the combustion area cavity 122. Further, as noted above, the distance along the circumference of the combustion chamber liner body 124 between cooling channels may be at least equal to the uniform width of each cooling channel 116 of the plurality of cooling channels. As the highest thermal stresses may be experienced at the throat 114 of the combustion chamber liner 10, these thermal stresses may be the basis for selection of the ideal cooling channel width 118. The remaining circumferential area is reserved for the remainder of the combustion chamber liner body 124, which may have the initial thickness 126 or any other thickness that is greater than the cooling channel wall thickness 120.

In an embodiment, the spiral pattern of the cooling channels 116 is selected such that the length of the cooling channels 116 through the longitudinal span of the combustion chamber liner 10 along the throat 114 exhibits a uniform cross-sectional width that is approximately the cooling channel width 118. Thus, the spiral cut cooling channels 116 may be parallel to the longitudinal axis of the combustion chamber liner 10 along the throat 114 of the combustion chamber liner 10. This may provide greater mitigation of the thermal stresses along the throat 114 of the combustion chamber liner 10, as the propellants or other cryogenic material may serve as a greater heat sink at the throat 114 due to the direction of the cooling channels 116 along the throat 114.

The specification and drawings are, accordingly, to be regarded in an illustrative rather than a restrictive sense.

## Claims

1. A combustion chamber liner for a rocket propulsion system, comprising:
a combustion chamber liner body 124 extending between a first and second end;
a combustion chamber liner internal wall 102 defined by the combustion chamber liner body 124, the combustion chamber liner internal wall 102 defining a combustion area cavity 122 extending between the first and second end;
a combustion chamber liner external wall 104 defined by the combustion chamber liner body 124, the combustion chamber liner external wall 104 being opposite the internal wall 102;
an inlet port 110 defined by the combustion chamber liner body 124 at the first end;
a nozzle exit port 112 defined by the combustion chamber liner body 124 at the second end;
a throat portion 114 defined by a portion of the combustion chamber liner body 124 between the first and second end; and
a plurality of spiral cooling channels 116 defined by the combustion chamber liner external wall with each spiral cooling channel 116 having a cooling channel wall thickness, the plurality of spiral cooling channels 116 extending between the first and second ends, with each of the plurality of spiral cooling channel 116 comprising a first chamfer at a first cooling channel end and a second chamfer at a second cooling channel end, wherein each cooling channel has a first decreasing wall thickness defined by the first chamfer that gradually decreases along the length of the cooling channel from the first cooling channel end to a minimum cooling channel wall thickness at the throat portion 114 and a second decreasing wall thickness defined by the second chamfer that gradually decreases along the length of each cooling channel from the second cooling channel end to a minimum cooling channel wall thickness at the throat portion 114.

2. The combustion chamber liner of claim 1 wherein the first chamfer starts proximate and spaced from the inlet port 110 and the second chamfer starts proximate and spaced from the nozzle exit port 112.

3. The combustion chamber liner of claim 1, wherein each spiral cooling channel 116 of the plurality of spiral cooling channels is defined by a uniform width.

4. The combustion chamber liner of claim 3, wherein a distance along the circumference of the combustion chamber liner body 124 between each spiral cooling channel 116 of the plurality of spiral cooling channels is at least equal to the uniform width.

5. The combustion chamber liner of claim 1, wherein the combustion chamber liner body 124 comprises a material chosen from a group consisting of copper, a copper alloy, titanium, carbon fiber, and Inconel.

6. The combustion chamber liner of claim 1, wherein a first portion of the combustion area cavity 122 at the throat portion 114 has a first area that is less than a second area of a second portion of the combustion area cavity 122 at the first end.

7. A method for fabricating a combustion chamber liner for a rocket propulsion system, comprising:
forming a material component into a combustion chamber liner body 124 extending between a first and second end, wherein the combustion chamber liner body 124 comprises:
a combustion chamber liner internal wall 102 defined by the combustion chamber liner body 124, the combustion chamber liner internal wall 102 defining a combustion area cavity 122 extending between the first and second end;
a combustion chamber liner external wall 104 defined by the combustion chamber liner body 124, the combustion chamber liner external wall 104 being opposite the internal wall;
an inlet port 110 defined by the combustion chamber liner body 124 at the first end;
a nozzle exit port 112 defined by the combustion chamber liner body 124 at the second end; and
a throat portion 114 defined by a portion of the combustion chamber liner body 124 between the first and second end; and
cutting, into the combustion chamber liner external wall, a plurality of spiral cooling channels 116 extending between the first and second end;
wherein cutting the plurality of spiral cooling channels results in a first chamfer at a first cooling channel end of the plurality of spiral cooling channels and a second chamfer at a second cooling channel end of the plurality of spiral cooling channels each cooling channel having a first decreasing wall thickness defined by the first chamfer that decreases along the length of the cooling channel from the first cooling channel end to a minimum cooling channel wall thickness at the throat portion 114 and a second decreasing wall thickness defined by the second chamfer that decreases along the length of each cooling channel from the second cooling channel end to a minimum cooling channel wall thickness at the throat portion 114.

8. The method of claim 7, wherein the combustion chamber body is formed using a computer numerical control machine programmed based at least in part on a digital representation of the combustion chamber body.

9. The method of claim 7, wherein the plurality of spiral cooling channels are cut into the combustion chamber liner external wall such that the plurality of spiral cooling channels are defined such that each spiral cooling channel has a uniform width.

10. The method of claim 9, wherein a distance along a circumference of the combustion chamber liner body between each spiral cooling channel of the plurality of spiral cooling channels is at least equal to the uniform width.

11. The method of claim 7, wherein cutting the plurality of spiral cooling channels results in the first chamfer at a first cooling channel end of the plurality of spiral cooling channels and the second chamfer at a second cooling channel end of the plurality of spiral cooling channels.

12. The method of claim 7, wherein the material component is selected from a group consisting of copper, a copper alloy, titanium, carbon fiber, and Inconel.

13. The method of claim 7, wherein the combustion chamber body is formed such that a first portion of the combustion area cavity at the throat portion has a first area that is less than a second area of a second portion of the combustion area cavity at the first end.

## Patentansprüche

1. Brennkammerauskleidung für ein Raketenantriebssystem, umfassend:
einen Brennkammerauskleidungskörper 124, der sich zwischen einem ersten und einem zweiten Ende erstreckt;
eine Brennkammerauskleidungsinnenwand 102, die durch den Brennkammerauskleidungskörper 124 definiert ist, wobei die Brennkammerauskleidungsinnenwand 102 einen Verbrennungshohlraum 122 definiert, der sich zwischen dem ersten und dem zweiten Ende erstreckt;
eine Brennkammerauskleidungsaußenwand 104, die durch den Brennkammerauskleidungskörper 124 definiert ist, wobei die Brennkammerauskleidungsaußenwand 104 der Innenwand 102 gegenüber liegt;
eine Einlassöffnung 110, die durch den Brennkammerauskleidungskörper 124 an dem ersten Ende Ende definiert ist;
eine Düsenaustrittsöffnung 112, die durch den Brennkammerauskleidungskörper 124 an dem zweiten Ende definiert ist;
einen Halsabschnitt 114, der durch einen Abschnitt des Brennkammerauskleidungskörpers 124 zwischen dem ersten und zweiten Ende definiert ist; und
eine Vielzahl von spiralförmigen Kühlkanälen 116, die durch die Brennkammerauskleidungsaußenwand definiert sind, wobei jeder spiralförmige Kühlkanal 116 eine Kühlkanalwanddicke aufweist, wobei sich die Vielzahl von spiralförmigen Kühlkanälen 116 zwischen dem ersten und dem zweiten Ende erstreckt, wobei jeder der Vielzahl von spiralförmigen Kühlkanälen 116 eine erste Abschrägung an einem ersten Kühlkanalende und eine zweite Abschrägung an einem zweiten Kühlkanalende aufweist, wobei jeder Kühlkanal eine erste abnehmende Wanddicke, die durch die erste Abschrägung definiert ist und die entlang der Länge des Kühlkanals von dem ersten Kühlkanalende bis zu einer minimalen Kühlkanalwanddicke am Halsabschnitt 114 allmählich abnimmt, und eine zweite abnehmende Wanddicke aufweist, die durch die zweite Abschrägung definiert ist und die entlang der Länge jedes Kühlkanals von dem zweiten Kühlkanalende bis zu einer minimalen Kühlkanalwanddicke am Halsabschnitt 114 allmählich abnimmt.

2. Brennkammerauskleidung nach Anspruch 1, wobei die erste Abschrägung in der Nähe und beabstandet von der Einlassöffnung 110 beginnt und die zweite Abschrägung in der Nähe und beabstandet von der Düsenaustrittsöffnung 112 beginnt.

3. Brennkammerauskleidung nach Anspruch 1, wobei jeder spiralförmige Kühlkanal 116 aus der Vielzahl von spiralförmigen Kühlkanälen durch eine einheitliche Breite definiert ist.

4. Brennkammerauskleidung nach Anspruch 3, wobei der Abstand entlang des Umfangs des Brennkammerauskleidungskörpers 124 zwischen den einzelnen spiralförmigen Kühlkanälen 116 der Vielzahl von spiralförmigen Kühlkanälen mindestens gleich der einheitlichen Breite ist.

5. Brennkammerauskleidung nach Anspruch 1, wobei der Brennkammerauskleidungskörper 124 ein Material umfasst, das aus einer Gruppe ausgewählt ist, die aus Kupfer, einer Kupferlegierung, Titan, Kohlenstofffaser und Inconel besteht.

6. Brennkammerauskleidung nach Anspruch 1, wobei ein erster Abschnitt des Verbrennungshohlraums 122 an dem Halsabschnitt 114 eine erste Fläche aufweist, die kleiner ist als eine zweite Fläche eines zweiten Teils des Verbrennungshohlraums 122 an dem ersten Ende.

7. Verfahren zum Herstellen einer Brennkammerauskleidung für ein Raketenantriebssystem, Folgendes umfassend:
Formen einer Materialkomponente zu einem Brennkammerauskleidungskörper 124, der sich zwischen einem ersten und einem zweiten Ende erstreckt, wobei der Brennkammerauskleidungskörper 124 Folgendes umfasst:
eine Brennkammerauskleidungsinnenwand 102, die durch den Brennkammerauskleidungskörper 124 definiert ist, wobei die Brennkammerauskleidungsinnenwand 102 einen Verbrennungshohlraum 122 definiert, der sich zwischen dem ersten und dem zweiten Ende erstreckt;
eine Brennkammerauskleidungsaußenwand 104, die durch den Brennkammerauskleidungskörper 124 definiert ist, wobei die Brennkammerauskleidungsaußenwand 104 der Innenwand gegenüber liegt;
eine Einlassöffnung 110, die durch den Brennkammerauskleidungskörper 124 an dem ersten Ende definiert ist;
eine Düsenaustrittsöffnung 112, die durch den Brennkammerauskleidungskörper 124 an dem zweiten Ende definiert ist; und
einen Halsabschnitt 114, der durch einen Abschnitt des Brennkammerauskleidungskörpers 124 zwischen dem ersten und dem zweiten Ende definiert ist; und
Schneiden einer Vielzahl von spiralförmigen Kühlkanälen 116, die sich zwischen dem ersten und dem zweiten Ende erstrecken, in die Brennkammerauskleidungsaußenwand;
wobei das Schneiden der Vielzahl von spiralförmigen Kühlkanälen in einer ersten Abschrägung an einem ersten Kühlkanalende der Vielzahl von spiralförmigen Kühlkanälen und einer zweiten Abschrägung an einem zweiten Kühlkanalende der Vielzahl von spiralförmigen Kühlkanälen resultiert, wobei jeder Kühlkanal eine erste abnehmende Wanddicke, die durch die erste Abschrägung definiert ist und die entlang der Länge des Kühlkanals von dem ersten Kühlkanalende bis zu einer minimalen Kühlkanalwanddicke am Halsabschnitt 114 abnimmt, und eine zweite abnehmende Wanddicke aufweist, die durch die zweite Abschrägung definiert ist und die entlang der Länge jedes Kühlkanals von dem zweiten Kühlkanalende bis zu einer minimalen Kühlkanalwanddicke am Halsabschnitt 114 abnimmt.

8. Verfahren nach Anspruch 7, wobei der Brennkammerkörper unter Verwendung einer computergesteuerten Maschine geformt wird, die mindestens teilweise auf Grundlage einer digitalen Darstellung des Brennkammerkörpers programmiert wird.

9. Verfahren nach Anspruch 7, wobei die Vielzahl von spiralförmigen Kühlkanälen so in die Außenwand der Brennkammerauskleidung geschnitten sind, dass die Vielzahl von spiralförmigen Kühlkanälen so definiert sind, dass jeder spiralförmige Kühlkanal eine einheitliche Breite aufweist.

10. Verfahren nach Anspruch 9, wobei der Abstand zwischen den einzelnen spiralförmigen Kühlkanälen der Vielzahl von spiralförmigen Kühlkanälen entlang des Umfangs des Brennkammerauskleidungskörpers mindestens gleich der einheitlichen Breite ist.

11. Verfahren nach Anspruch 7, wobei das Schneiden der Vielzahl von spiralförmigen Kühlkanälen in der ersten Abschrägung an einem ersten Kühlkanalende der Vielzahl von spiralförmigen Kühlkanälen und der zweiten Abschrägung an einem zweiten Kühlkanalende der Vielzahl von spiralförmigen Kühlkanäle resultiert.

12. Verfahren nach Anspruch 7, wobei die Materialkomponente aus einer Gruppe ausgewählt ist, die aus Kupfer, einer Kupferlegierung, Titan, Kohlefaser und Inconel besteht.

13. Verfahren nach Anspruch 7, wobei der Brennkammerkörper so geformt ist, dass ein erster Abschnitt des Verbrennungshohlraums an dem Halsabschnitt eine erste Fläche aufweist, die kleiner ist als eine zweite Fläche eines zweiten Abschnitts des Verbrennungshohlraums am ersten Ende.

## Revendications

1. Chemise de chambre de combustion pour un système de propulsion de fusée, comprenant :
un corps de chemise de chambre de combustion 124 s'étendant entre une première et une seconde extrémité ;
une paroi interne de chemise de chambre de combustion 102 définie par le corps de chemise de chambre de combustion 124, la paroi interne de chemise de chambre de combustion 102 définissant une cavité de zone de combustion 122 s'étendant entre la première et seconde extrémité ;
une paroi externe de chemise de chambre de combustion 104 définie par le corps de chemise de chambre de combustion 124, la paroi externe de chemise de chambre de combustion 104 étant opposée à la paroi interne 102 ;
un orifice d'entrée 110 défini par le corps de chemise de chambre de combustion 124 à la première extrémité ;
un orifice de sortie de buse 112 défini par le corps de chemise de chambre de combustion 124 à la seconde extrémité ;
une partie de gorge 114 définie par une partie de corps de chemise de chambre de combustion 124 entre la première et seconde extrémité ; et
une pluralité de canaux de refroidissement en spirale 116 définis par la paroi externe de chemise de chambre de combustion, avec chaque canal de refroidissement en spirale 116 ayant une épaisseur de paroi de canal de refroidissement, la pluralité de canaux de refroidissement en spirale 116 s'étendant entre les première et seconde extrémités, avec chacun de la pluralité de canaux de refroidissement en spirale 116 comprenant un premier chanfrein à une première extrémité de canal de refroidissement et un second chanfrein à une seconde extrémité de canal de refroidissement, dans lequel chaque canal de refroidissement a une première épaisseur de paroi décroissante définie par le premier chanfrein qui diminue progressivement le long de la longueur du canal de refroidissement à partir de la première extrémité de canal de refroidissement jusqu'à une épaisseur minimale de paroi de canal de refroidissement au niveau de la partie de gorge 114 et une seconde épaisseur de paroi décroissante définie par le second chanfrein qui diminue progressivement le long de la longueur de chaque canal de refroidissement à partir de la seconde extrémité de canal de refroidissement jusqu'à une épaisseur minimale de paroi de canal de refroidissement au niveau de la partie de gorge 114.

2. Chemise de chambre de combustion selon la revendication 1, dans lequel le premier chanfrein commence à proximité et à distance de l'orifice d'entrée 110 et le second chanfrein commence à proximité et à distance de l'orifice de sortie de buse 112.

3. Chemise de chambre de combustion selon la revendication 1, dans lequel chaque canal de refroidissement en spirale 116 de la pluralité de canaux de refroidissement en spirale est défini par une largeur uniforme.

4. Chemise de chambre de combustion selon la revendication 3, dans lequel une distance le long de la circonférence du corps de chemise de chambre de combustion 124 entre chaque canal de refroidissement en spirale 116 de la pluralité de canaux de refroidissement en spirale est au moins égale à la largeur uniforme.

5. Chemise de chambre de combustion selon la revendication 1, dans lequel le corps de chemise de chambre de combustion 124 comprend un matériau choisi dans un groupe constitué de cuivre, d'un alliage de cuivre, de titane, de fibre de carbone et d'Inconel.

6. Chemise de chambre de combustion selon la revendication 1, dans lequel une première partie de la cavité de zone de combustion 122 au niveau de la partie de gorge 114 a une première zone qui est inférieure à une seconde zone d'une seconde partie de la cavité de zone de combustion 122 à la première extrémité.

7. Procédé de fabrication d'une chemise de chambre de combustion pour un système de propulsion de fusée, comprenant :
la formation d'un composant matériel dans un corps de chemise de chambre de combustion 124 s'étendant entre une première et une seconde extrémité, dans lequel le corps de chemise de chambre de combustion 124 comprend :
une paroi interne de chemise de chambre de combustion 102 définie par le corps de chemise de chambre de combustion 124, la paroi interne de chemise de chambre de combustion 102 définissant une cavité de zone de combustion 122 s'étendant entre la première et la seconde extrémité ;
une paroi externe de chemise de chambre de combustion 104 définie par le corps de chemise de chambre de combustion 124, la paroi externe de chemise de chambre de combustion 104 étant opposée à la paroi interne ;
un orifice d'entrée 110 défini par le corps de chemise de chambre de combustion 124 à la première extrémité ;
un orifice de sortie de buse 112 défini par le corps de chemise de chambre de combustion 124 à la seconde extrémité ; et
une partie de gorge 114 définie par une partie de corps de chemise de chambre de combustion 124 entre la première et la seconde extrémité ; et
la découpe, dans la paroi externe de chemise de chambre de combustion, d'une pluralité de canaux de refroidissement en spirale 116 s'étendant entre la première et la seconde extrémité ;
dans lequel la découpe de la pluralité de canaux de refroidissement en spirale entraîne un premier chanfrein à une première extrémité de canal de refroidissement de la pluralité de canaux de refroidissement en spirale et un second chanfrein à une seconde extrémité de canal de refroidissement de la pluralité de canaux de refroidissement en spirale, chaque canal de refroidissement ayant une première épaisseur de paroi de canal de refroidissement décroissante définie par le premier chanfrein qui diminue le long de la longueur du canal de refroidissement à partir de la première extrémité de canal de refroidissement jusqu'à une épaisseur de paroi minimale de canal de refroidissement au niveau de la partie de gorge 114 et une seconde épaisseur de paroi décroissante définie par le second chanfrein qui diminue le long de la longueur de chaque canal de refroidissement à partir de la seconde extrémité de canal de refroidissement jusqu'à une épaisseur minimale de paroi de canal de refroidissement au niveau de la partie de gorge 114.

8. Procédé selon la revendication 7, dans lequel le corps de chambre de combustion est formé à l'aide d'une machine à commande numérique par ordinateur programmée sur la base au moins en partie d'une représentation numérique du corps de chambre de combustion.

9. Procédé selon la revendication 7, dans lequel la pluralité de canaux de refroidissement en spirale sont découpés dans la paroi externe de chemise de chambre de combustion de telle sorte que la pluralité de canaux de refroidissement en spirale sont définis de telle sorte que chaque canal de refroidissement en spirale ait une largeur uniforme.

10. Procédé selon la revendication 9, dans lequel une distance le long d'une circonférence du corps de chemise de chambre de combustion entre chaque canal de refroidissement en spirale de la pluralité de canaux de refroidissement en spirale est au moins égale à la largeur uniforme.

11. Procédé selon la revendication 7, dans lequel la découpe de la pluralité de canaux de refroidissement en spirale entraîne le premier chanfrein à une première extrémité de canal de refroidissement de la pluralité de canaux de refroidissement en spirale et le second chanfrein à une seconde extrémité de canal de refroidissement de la pluralité de canaux de refroidissement en spirale.

12. Procédé selon la revendication 7, dans lequel le composant matériel est choisi dans un groupe constitué de cuivre, d'un alliage de cuivre, de titane, de fibre de carbone et de l'Inconel.

13. Procédé selon la revendication 7, dans lequel le corps de chambre de combustion est formé de telle sorte qu'une première partie de la cavité de la zone de combustion au niveau de la partie de gorge présente une première zone qui est inférieure à une seconde zone d'une seconde partie de la cavité de zone de combustion à la première extrémité.
